Europäisches Patentamt

European Patent Office

Office européen des brevets

(11) Veröffentlichungsnummer: **0 165 389**
**A2**

(12) # EUROPÄISCHE PATENTANMELDUNG

(21) Anmeldenummer: 85103891.9

(22) Anmeldetag: 01.04.85

(51) Int. Cl.⁴: **A 01 D 17/00**
**A 01 D 33/08**

(30) Priorität: 24.05.84 DE 3419409

(43) Veröffentlichungstag der Anmeldung:
27.12.85 Patentblatt 85/52

(84) Benannte Vertragsstaaten:
AT BE CH DE FR GB IT LI NL SE

(71) Anmelder: Maschinenfabrik Niewöhner GmbH & Co. KG
Immelstrasse 170
D-4830 Gütersloh 1(DE)

(72) Erfinder: Niewöhner, Bruno
Alexanderweg 20
D-4830 Gütersloh 11(DE)

(72) Erfinder: Niewöhner, Bruno, Jun.
Alexanderweg 40
D-4830 Gütersloh 11(DE)

(74) Vertreter: Patentanwälte Dipl.-Ing. Bodo Thielking
Dipl.-Ing. Otto Elbertzhagen
Gadderbaumer Strasse 20
D-4800 Bielefeld 1(DE)

(54) Kartoffelerntemaschine.

(57) Bei einer Kartoffelerntemaschine mit Aufnahmeschar, sich anschließender, nach hinten auf ein Krautband fördernder Siebkette (4), einem quer zur Fahrtrichtung und zur Siebkette (4) verlaufenden Reinigungsband (7), über das sich ein Abstreifer (11) erstreckt, ferner mit einem die Kartoffeln in Fahrtrichtung nach vorne fördernden Verleseband (8) ist ein gegebenenfalls mehrfach vorgesehener Abstreifer (11) so angeordnet, daß er die Kartoffeln nach hinten auf das Verleseband (8) abwirft. Das Verleseband (8) liegt mit dem entsprechenden Aufnahmeende tiefer als das Reinigungsband (7). Eine solche Anordnung nutzt den Vortrennungseffekt des Krautbandes (6) aus und verstärkt ihn zu einer besonders sauberen Trennung.

FIG. 4

EP 0 165 389 A2

## Kartoffelerntemaschine

Die Erfindung betrifft eine Kartoffelerntemaschine mit Aufnahmeschar, sich anschließender nach hinten auf ein Krautband fördernder Siebkette, einem quer zur Fahrtrichtung und zur Siebkette verlaufenden Reinigungsband, über das sich ein Abstreifer quer erstreckt, ferner mit einem die Kartoffeln in Fahrtrichtung nach vorn fördernden Verleseband.

Bei einer bekannten Vorrichtung dieser Art endet das Verleseband vor dem Reinigungsband. Die Abstreifer sind so angeordnet, daß sie die Kartoffeln nach vorne auf das Verleseband abstreifen sollen. Die Abstreifer verlaufen schräg von der hinteren Seitenkante des oberen Trums des Reinigungsbandes in Laufrichtung zu dessen vorderer Seitenkante. Auf das Reinigungsband gelangen die durch das Krautband gefallenen Kartoffeln und Rückstände in einer gewissen Vorsortierung in der Weise, daß die Rückstände wie Kluten, Steine oder dergleichen sich an der vorderen Seitenkante des Reinigungsbandes konzentrieren, während die Kartoffeln konzentriert auf der in Fahrtrichtung gesehen hinteren Hälfte liegen, also in Laufrichtung des Bandes gesehen links. Dies bedeutet, daß die in gewisser Weise bereits vorsortierten Kartoffeln durch die Abstreiforgane über die

- 2 -

Kluten und Steine hinweg auf das Verleseband abgestreift werden müssen. Die durch die Anordnung
des Krautbandes und des Reingiungsbandes erzeugte
Vorsortierung wird dabei also wieder zunichte.

Ausgehend von diesem Stand der Technik liegt der
Erfindung die Aufgabe zugrunde, eine Kartoffelerntemaschine dieser Art so auszubilden, daß die Trennwirkung des Reinigungsbandes mit Abstreifer verbessert wird.

Die Lösung dieser Aufgabe erfolgt erfindungsgemäß
dadurch, daß der Abstreifer schräg von der vorderen
Seitenkante des oberen Trums des Reinigungsbandes
in Laufrichtung zu dessen hinterer Seitenkante
verläuft und die hintere Umlenkwalze des Verlesebandes unterhalb des Fördertrums des Reinigungsbandes angeordnet ist.

Weitere bevorzugte Ausführungsbeispiele der Erfindung sind in den Unteransprüchen beschrieben.

Die erfindungsgemäße Kartoffelerntemaschine weist
eine besonders gute Trennwirkung auf. Sie unterstützt die Vortrennwirkung auf dem Reinigungsband
dadurch, daß sie die in Fahrtrichtung hinten
liegenden Kartoffeln nach hinten abwirft.

- 3 -

Nachstehend werden zwei bevorzugte Ausführungsformen der Erfindung anhand der Zeichnung im
einzelnen beschrieben.
Es zeigen:

Figur 1 - eine schematische Seitenansicht einer
ersten Ausführungsform der Kartoffelerntemaschine in Fahrtrichtung gesehen von links,

Figur 2 - eine schematische Seitenansicht der
Ausführungsform gemäß Figur 1 auf den
hinteren Bereich der Kartoffelerntemaschine in Fahrtrichtung von rechts,

Figur 3 - eine Draufsicht auf die Ausführungsform gemäß Figuren 1 und 2 in
schematischer Darstellung,

Figur 4 - eine zu Figur 2 analoge Seitenansicht einer zweiten Ausführungsform.

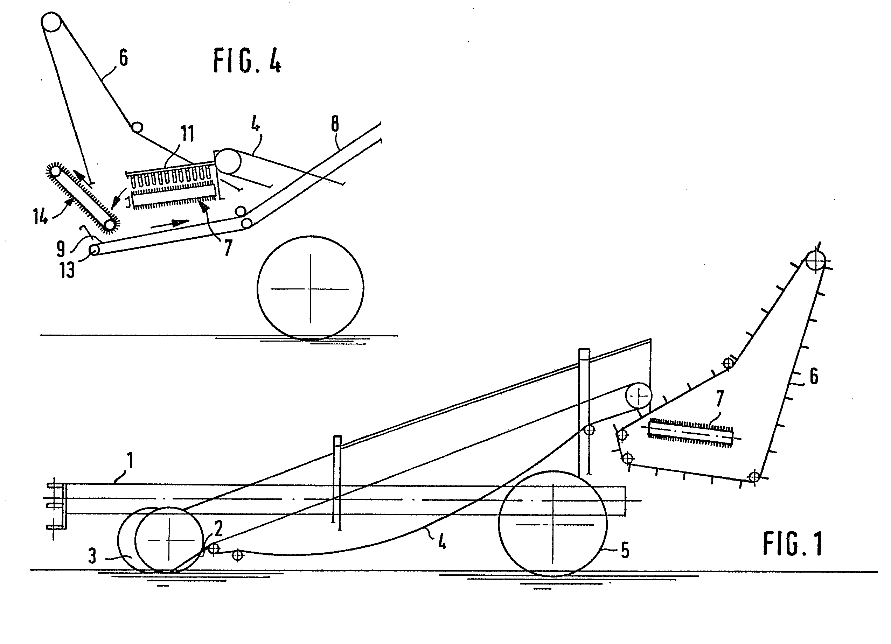

In Figur 1 ist der Maschinenrahmen 1 angedeutet,
dessen linkes Ende in Fahrtrichtung weist. Ein Aufnahmeschar 2 ist hinter einer schematisch angeordneten Dammrolle 3 vorgesehen. An das Aufnahmeschar schließt sich die Siebkette 4 an. Von der
Siebkette 4 gelangen die aufgenommenen Kartoffeln
mit dem Kartoffelkraut auf das Krautband 6, das

- 4 -

- 4 -

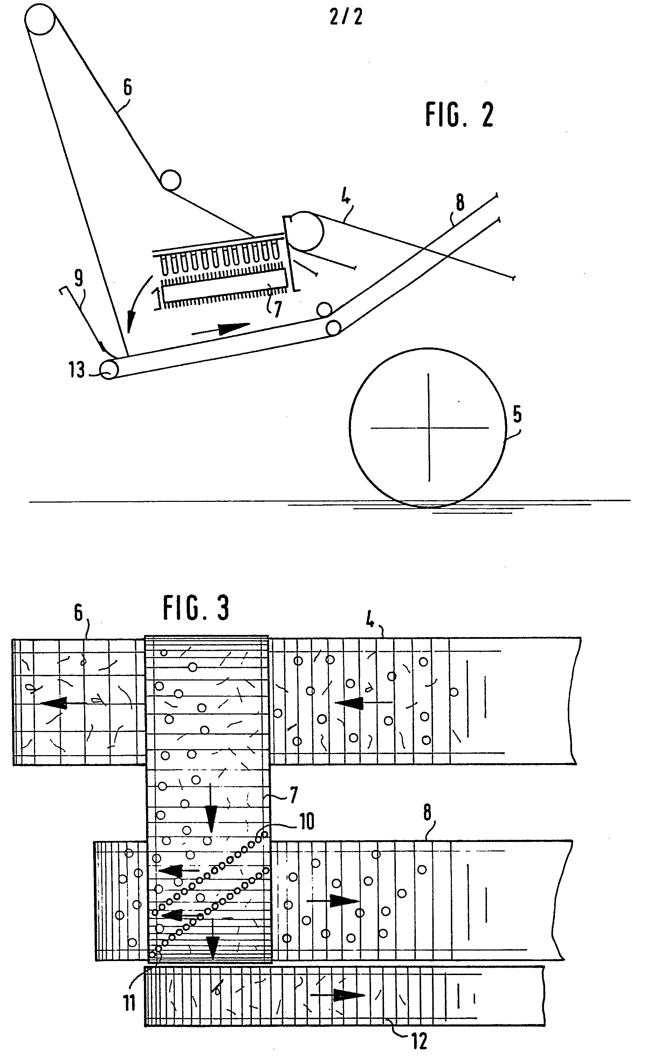

hinter dem Laufrad 5 umläuft. Das Kartoffelkraut wird nach hinten vom Krautband 6 abgeworfen und die Kartoffeln sowie die Beimengungen wie Kluten und Steine fallen durch das Krautband 6 auf das Reinigungsband 7. Auf dem oberen Trum des Reinigungsbandes 7 sind Kartoffeln und Steine bzw. Kluten schon in gewisser Weise vorsortiert. Die Kartoffeln liegen vermehrt am in Laufrichtung des Reinigungsbandes 7 gesehen rechten Ende, während die Beimengungen wie Steine oder dergleichen gehäuft am linken Ende liegen. Dies ist schematisch in der Draufsicht gemäß Figur 3 dargestellt.

Mit 10 und 11 sind zwei als Pendelkämme ausgebildete Abstreifer bezeichnet, die sich quer über das Reinigungsband erstrecken, und zwar in Laufrichtung von der linken Seitenkante zur rechten Seitenkante. Diese Anordnung der Abstreiforgane führt zu einem Abstreifen der Kartoffeln nach hinten. Die Kartoffeln fallen dabei entweder unmittelbar auf das nach vorne laufende Verleseband 8 oder gegen das Leitblech 9, wie dies bei der ersten Ausführungsform dargestellt ist oder sie gelangen zunächst auf das zusätzliche Reinigungsband 14, von dem sie dann auf das Verleseband 8 abrollen (vergl. Fig. 4).

Neben dem Verleseband 8 ist ein Beimengenband 12 vorgesehen, das sich nach vorne erstreckt.

Das Reinigungsband 7 ist in Querrichtung nach hinten geneigt.

- 5 -

- 5 -

Die nach hinten abfallende Neigung des Reinigungsbandes unterstützt die Trennung zwischen Kartoffeln
und Steinen.

Patentansprüche:

1. Kartoffelerntemaschine mit Aufnahmeschar, sich anschließender nach hinten auf ein Krautband fördernder Siebkette, einem quer zur Fahrtrichtung und zur Siebkette verlaufenden Reinigungsband, über das sich ein Abstreifer quer erstreckt, ferner mit einem die Kartoffeln in Fahrtrichtung nach vorn fördernden Verleseband, dadurch gekennzeichnet, daß der Abstreifer (10; 11) schräg von der vorderen Seitenkante des oberen Trums des Reinigungsbandes (7) in Laufrichtung zu dessen hinterer Seitenkante verläuft und die hintere Umlenkwalze (13) des Verlesebandes (8) unterhalb des Fördertrums des Reinigungsbandes (7) angeordnet ist.

2. Kartoffelerntemaschine nach Anspruch 1, dadurch gekennzeichnet, daß die hintere Umlenkwalze (13) des Verlesebandes (8) unterhalb sowohl des oberen Trums als auch des unteren Trums des Reinigungsbandes (7) angeordnet ist.

3. Kartoffelerntemaschine nach einem oder mehreren der Ansprüche 1 bis 2, dadurch gekennzeichnet, daß sich das Verleseband (8) bis hinter die hintere Seitenkante des Reinigungsbandes (7) erstreckt.

- 2 -

- 2 -

4. Kartoffelerntemaschine nach einem oder mehreren
der Ansprüche 1 bis 3,
dadurch gekennzeichnet,
daß hinter der hinteren Seitenkante des Reinigungsbandes (7) ein schräg nach vorn abfallend
geneigtes Leitblech vorgesehen ist.

5. Kartoffelerntemaschine nach einem oder mehreren
der Ansprüche 1 bis 3,
dadurch gekennzeichnet,
daß     hinter der hinteren Seitenkante des Reinigungsbandes (7) ein schräg aufwärts geneigtes
Nachreinigungsband (14) angeordnet ist, dessen
oberes Trum schräg aufwärts nach hinten fördert.

6. Kartoffelerntemaschine nach einem oder mehreren
der Ansprüche 1 bis 5,
dadurch gekennzeichnet,
daß der Abstreifer (10; 11) als Pendelkamm ausgebildet ist.

7. Kartoffelerntemaschine nach einem oder mehreren
der Ansprüche 1 bis 6,
dadurch gekennzeichnet,
daß zwei zumindest im wesentlichen parallel zueinander verlaufende Abstreifer (10; 11) vorgesehen sind.

- 3 -

- 3 -

8. Kartoffelerntemaschine nach einem oder mehreren
   der Ansprüche 1 bis 7,
   dadurch gekennzeichnet,
   daß das obere Trum des Reinigungsbandes (7) quer
   zur Laufrichtung nach hinten abfallend geneigt
   angeordnet ist.

9. Kartoffelerntemaschine nach Anspruch 8,
   dadurch gekennzeichnet,
   daß die Querneigung des Reinigungsbandes (7)
   einstellbar ist.

FIG. 4

FIG. 1

0165389

FIG. 2

FIG. 3